# EUROPEAN PATENT SPECIFICATION

(11) **EP 2 792 948 B1**
(45) Date of publication and mention of the grant of the patent: **27.07.2016**
(21) Application number: 12856784.9
(22) Date of filing: 17.02.2012
(51) Int. Cl.: F22G 1/04, F22G 7/04

(54) **APPARATUS FOR GENERATING SUPERHEATED VAPOR USING WASTE HEAT RECOVERY**
VORRICHTUNG ZUR ERZEUGUNG VON ÜBERHITZTEM DAMPF MIT WÄRMERÜCKGEWINNUNG
APPAREIL DESTINÉ À PRODUIRE DE LA VAPEUR SURCHAUFFÉE EN UTILISANT UNE RÉCUPÉRATION DE CHALEUR PERDUE

(30) Priority: 13.12.2011 KR 20110133922
(43) Date of publication of application: 22.10.2014
(73) Proprietor: Korens Co., Ltd., Gyeongsangnam-do 626-220 (KR)
(72) Inventor: KIM, Tae Jin, Gyeongsangnam-do 626-220 (KR); CHO, Yong Kuk, Busan-si 612-020 (KR)
(74) Representative: Viering, Jentschura & Partner mbB Patent- und Rechtsanwälte
(86) International application number: PCT/KR2012/001209
(87) International publication number: WO 2013/089314

(56) References cited:
- JP-A- S5 813 987
- JP-A- S60 251 388
- JP-A- 2004 044 870
- JP-A- 2009 133 607
- JP-A- 2010 144 979
- JP-A- 2010 144 979
- KR-A- 20090 104 163

## Description

### [Technical Field]

The present invention relates to an apparatus for generating superheated vapor using waste heat recovery, and more particularly, to an apparatus for generating superheated vapor using waste heat recovery which can significantly improve the efficiency of generating superheated vapor from working fluid using waste heat such as of exhaust gas.

### [Background Art]

It is well known that the heat efficiency of internal combustion engines used in vehicles, vessels, or the like is very low. Although only about 30% of fuel supplied to internal combustion engines is used as output energy, it is difficult to improve fuel efficiency.

Energy that is not extracted as usable mechanical energy is discharged to the air as waste heat, for example, through the discharge of exhaust gas from an internal combustion engine, charge air cooling, or heat dissipation from engine coolant.

Waste heat recovery systems which promote an improvement in fuel efficiency by actively recovering such waste heat are utilized these days. Recently, a waste heat recovery system having an organic Rankine cycle is used. Such a waste heat recovery system is configured so as to effectively extract mechanical energy from a turbine by converting working fluid into hot vapor through heat exchange and then supplying the hot vapor of working fluid to the turbine.

Such a waste heat recovery system is provided with an apparatus for generating superheated vapor which converts dry saturated vapor of working fluid into superheated vapor using the high-temperature heat of exhaust gas. It is possible to further increase the efficiency of the turbine by supplying the superheated vapor of working fluid to the turbine.

Since the apparatus for generating superheated vapor of the waste heat recovery system is configured such that the high-temperature and high-pressure working fluid exchanges heat with the high-temperature exhaust gas, it is highly possible that the working fluid may leak and the leaking working fluid may cause severe problems inside a vehicle, which are problematic.

JP S60 251388 A discloses that the exhaust gas 2 of a gas turbine 1 is introduced into the waste heat retrieving heat exc hanger 4 and heat exchange is effected between feed water in an evaporator 5 (cf. Abstract).

JP 2004 044870 A discloses that high temperature fluid is made to flow into the space 3A arranged with the rows of tubes and low temperature fluid is made to flow into the space 3B arr anged with the corrugated fins 5 (cf. Abstract).

### [Disclosure]

### [Technical Problem]

Accordingly, the present invention has been made keeping in mind the above problems occurring in the prior art, and an object of the present invention is to provide an apparatus for generating superheated vapor using waste heat recovery, in which exhaust gas tubes through which exhaust gas passes and working fluid tubes through which working fluid passes are constructed independently inside a housing in order to significantly increase the heat exchange efficiency between the exhaust gas and the working fluid.

### [Technical Solution]

In order to accomplish the above object, the present invention provides an apparatus for generating superheated vapor using waste heat recovery as described in claim 1.

Air communication holes maybe formed so as to penetrate through an outer surface of at one side of the housing. Each of the plurality of exhaust gas tubes may have a flat panel structure. Each of the plurality of working fluid tubes may have a flat surface formed on either an upper surface or a lower surface. The flat surfaces of the plurality of working fluid tubes may directly adjoin to the plurality of exhaust gas tubes

Each of the plurality of working fluid tubes may have an oval cross-sectional structure that has a flat surface on either the upper surface or the lower surface.

Each of the plurality of working fluid tubes may be bent into the shape of an S. One end of each of the plurality of working fluid tubes may be connected to the inlet pipe. The other end of each of the plurality of working fluid tubes may be connected to the outlet pipe.

Each of the plurality of exhaust gas tubes has wave fins therein, first and second fitting assemblies are provided on both ends of the plurality of exhaust gas tubes. Each of the first and second fitting assemblies may include a plurality of fitting slots. Both ends of the plurality of exhaust gas tubes may be fitted into the fitting slots of the first and second fitting assemblies.

### [Advantageous Effects]

According to the present invention, it is possible to advantageously minimize the possibility that high-temperature and high-pressure working fluid leaks by minimizing the thermal stress of the fluid tubes through which the working fluid passes and to significantly improve the heat exchange efficiency of the working fluid by increasing the area where the working fluid that passes through the working fluid tubes comes into contact with exhaust gas.

### [Description of Drawings]

FIG. 1 is a perspective view showing an apparatus for generating superheated vapor according to an embodiment of the present invention;
FIG. 2 is an exploded perspective view showing the apparatus for generating superheated vapor according to an embodiment of the present invention;
FIG. 3 is a top-plan view showing the apparatus for generating superheated vapor according to an embodiment of the present invention;
FIG. 4 is a cross-sectional view taken along line A-A in FIG. 3;
FIG. 5 is a cross-sectional view taken along line B-B in FIG. 3; and
FIG. 6 is a cross-sectional view taken along line C-C in FIG. 3.

### [Mode for Invention]

Hereinafter an exemplary embodiment of the present invention will be described in detail in conjunction with the accompanying drawings.

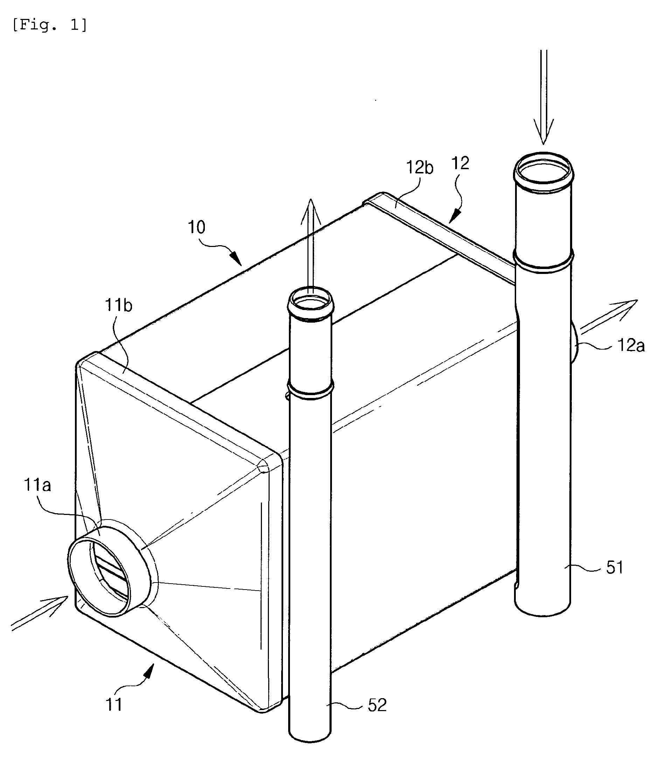

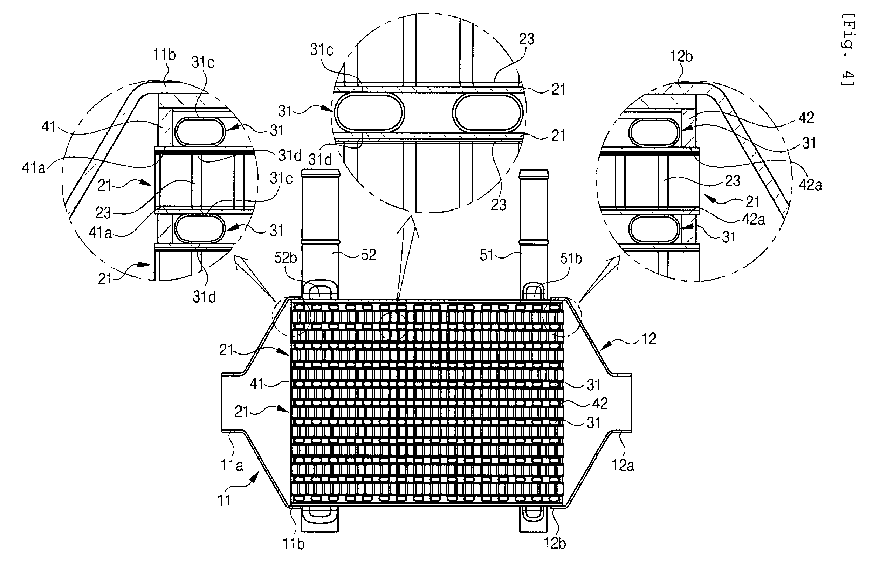

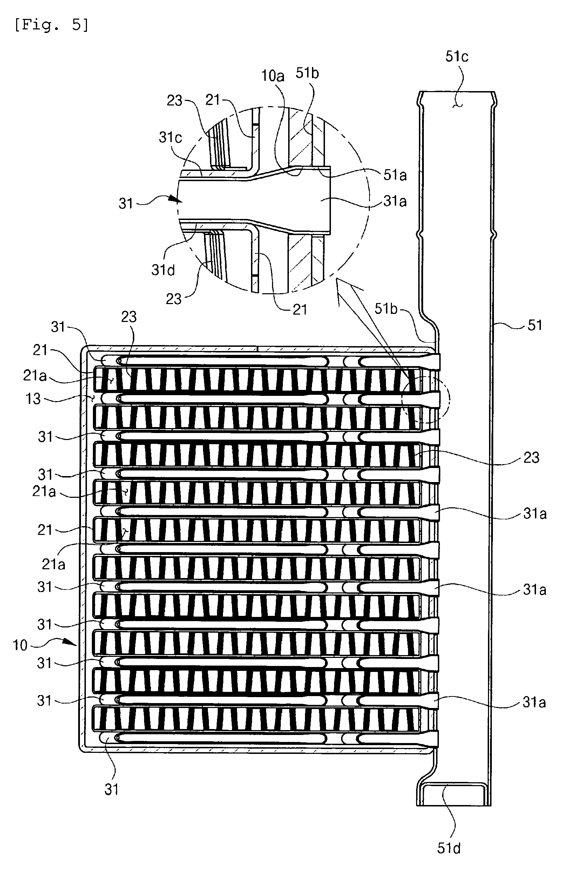

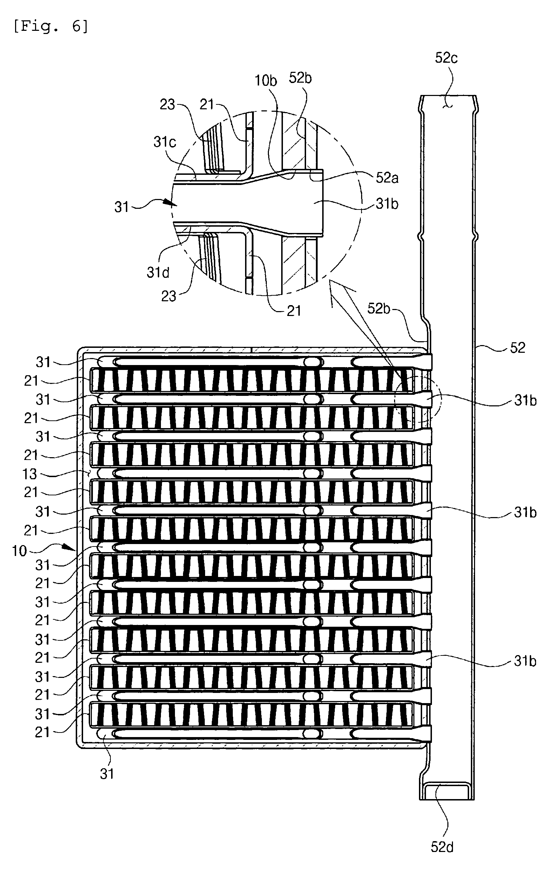

FIGS. 1 to 6 show an apparatus for generating superheated vapor using waste heat recovery according to an embodiment of the present invention.

As shown in these figures, the apparatus for generating superheated vapor using waste heat recovery according to the present invention includes a housing 10 which has an inlet tank 11 and an outlet tank 12 at both ends, a plurality of exhaust gas tubes 21 which are disposed inside the housing 10 such that the exhaust gas tubes 21 are spaced apart from each other at preset distances in the top-bottom direction, and a plurality of working fluid tubes 31 each of which alternates with the adjacent exhaust gas tubes 21 of the plurality of exhaust gas tubes 21.

The housing 10 is configured as an angled structure, with opposite ends thereof being open. A hollow section 13 is formed inside the housing 10. The inlet tank 11 and the outlet tank 12 are respectively coupled to the opposite ends of the housing 10. The inlet tank 11 and the outlet tank 12 have the shape of a diffuser. Exhaust gas is introduced toward the housing 10 through the inlet tank 11, and the exhaust gas is discharged from the housing 10 through the outlet tank 12 to the outside.

A coupling sleeve 11a protrudes from one end of the inlet tank 11, and an exhaust gas pipe (not shown) is coupled with the coupling sleeve 11a. A fitting rim 11b extends from the other end of the inlet tank 11 toward one end of the housing 10. One end of the housing 10 is fitted into the fitting rim 11b, and then is coupled with the fitting rim 11b by welding or the like.

A fitting rim 12b extends from one end of the outlet tank 12 toward the other end of the housing 10. A coupling sleeve 12a protrudes from the other end of the outlet tank 12, and an exhaust gas pipe (not shown) is coupled to the coupling sleeve 12a. The other end of the housing 10 is fitted into the fitting rim 12b, and then is coupled with the fitting rim 12b by welding or the like.

The plurality of exhaust gas tubes 21 are spaced apart from each other at preset distances in the top-bottom direction. Each of the exhaust gas tubes 21 is configured as a flat panel structure, opposite ends of which are open. An exhaust gas passage 21a through which exhaust gas passes is formed inside each of the exhaust gas tubes 21, and wave fins 23 intended to increase the heat exchange efficiency of the exhaust gas are disposed in the exhaust gas passage 21a.

Both ends of the plurality of exhaust gas tubes 21 are disposed at both end sides of the housing 10 through first and second fitting assemblies 41 and 42.

The first fitting assembly 41 has a plurality of fitting slots 41a, and is coupled to one end of the housing 10 by welding or the like. The plurality of fitting slots 41a are spaced apart from each other at distances corresponding to the distances of the wave fin structures 21. Accordingly, one end of each of the exhaust gas tubes 21 can be respectively fitted into and then be coupled a corresponding fitting slot 41a of the fitting slots 41a of the first fitting assembly 41 and then be coupled to the first fitting assembly 41 by welding or the like.

The second fitting assembly 42 has a plurality of fitting slots 42a, and is coupled to the other end of the housing 10 by welding or the like. The plurality of fitting slots 42a are spaced apart from each other at distances corresponding to the distances of the exhaust gas tubes 21. Accordingly, the other end of each of the exhaust gas tubes 21 can be respectively fitted into a corresponding fitting slot 42a of the fitting slots 42a of the second fitting assembly 42 and then be coupled to the second fitting assembly 42 by welding or the like.

The first and second fitting assemblies 41 and 42 allow the plurality of exhaust gas tubes 21 to be disposed inside the housing 10 while being accurately spaced apart from each other in a top-bottom direction.

The first and second fitting assemblies 41 and 42 are respectively coupled to the both ends of the housing 10 in an airtight fashion. Both ends of the housing 10 can seal other parts than openings of the exhaust gas tubes 21 in an airtight fashion through the first and second fitting assemblies 41 and 42.

The plurality of working fluid tubes 31 are disposed between the plurality of exhaust gas tubes 21. Each of the plurality of working fluid tubes 31 is bent so as to form a continuous S-shaped structure. The upper surface and the bottom surface of each of the plurality of working fluid tubes 31 directly adjoin to and are coupled to adjacent exhaust gas tubes 21 of the plurality of exhaust gas tubes 21 by welding or the like.

An inlet pipe 51 through which working fluid is introduced and an outlet pipe 52 through which the working fluid is discharged are connected to each of the plurality of working fluid tubes 31 in a communicating fashion. The inlet pipe 51 and the outlet pipe 52 are connected to one side surface of the housing 10 by welding or the like.

The inlet pipe 51 has an open hole 51c at the upper end thereof and a blind hole 51d at the lower end thereof. The working fluid is introduced through the upper open hole 51c of the inlet pipe 51.

The inlet pipe 51 is disposed in the top-bottom direction on one side surface of the housing 10 adjacent to the other end. A flat surface 51b is formed on the outer circumference at one side of the inlet pipe 51. The flat surface 51b is coupled to one side surface of the housing 10 by welding or the like. A plurality of inlet holes 51a is formed in the flat surface 51b of the inlet pipe 51. Through-holes 10a corresponding to the plurality of inlet holes 51a of the inlet pipe 51 are formed in one side surface of the housing 10 adjacent to the other end. One end 31a of each of the working fluid tubes 31 is connected to the inlet pipe 51 adjacent to a corresponding inlet hole 51a of the inlet holes 51a in a sealing fashion after having passed through a corresponding through-hole 10a of the through-holes 10a.

An open hole 52c is formed at the upper end of the outlet pipe 52, and a blind hole 52d is formed at the lower end of the outlet pipe 52. Accordingly, working fluid is discharged through the upper open hole 52c of the outlet pipe 52.

The outlet pipe 52 is disposed in the top-bottom direction one side surface of the housing 10 adjacent to one end. A flat surface 52b is formed on the outer circumference at one side of the outlet pipe 52. The flat surface 51b is coupled to one side surface of the housing 10 by welding or the like. A plurality of outlet holes 52a is formed in the flat surface 52b of the outlet pipe 52. Through-holes 10b corresponding to the plurality of outlet holes 52a of the outlet pipe 52 are formed in one side surface of the housing 10 adjacent to the other end. The other end 31b of each of the working fluid tubes 31 is connected to the outlet pipe 51 adjacent to a corresponding outlet hole of the outlet holes 52a in a sealing fashion after having passed through a corresponding through-hole 10b of the through-holes 10b.

Flat surfaces 31c and 31d are respectively formed on the upper and lower surfaces of each of the plurality of working fluid tubes 31. The flat surfaces 31c and 31d of the working fluid tubes 31 are configured so as to directly adjoin to adjacent exhaust gas tubes 21 of the plurality of exhaust gas tubes 21. In this fashion, the plurality of working fluid tubes 31 are configured so as to be in face-to-face contact with the plurality of exhaust gas tubes 21. Accordingly, there is an advantage in that the heat exchange efficiency of the working fluid that passes through the working fluid tubes 31 is significantly increased.

It is preferred that each of the working fluid tubes 31 is configured so as to have an oval cross-section in which the flat surfaces 31c and 31d are respectively formed on the upper and lower surfaces. The structure having this oval cross-section can minimize the concentration of thermal stress when the high-temperature and high-pressure working fluid is passing through the inside of the plurality of working fluid tubes 31, thereby preventing the plurality of working fluid tubes 31 from being damaged or broken.

It is preferred that the cross-section of the both ends 31a and 31b of the plurality of working fluid tubes 31 be circular so as to be easily connected to the inlet pipe 51 and the outlet pipe 52 in a sealing fashion.

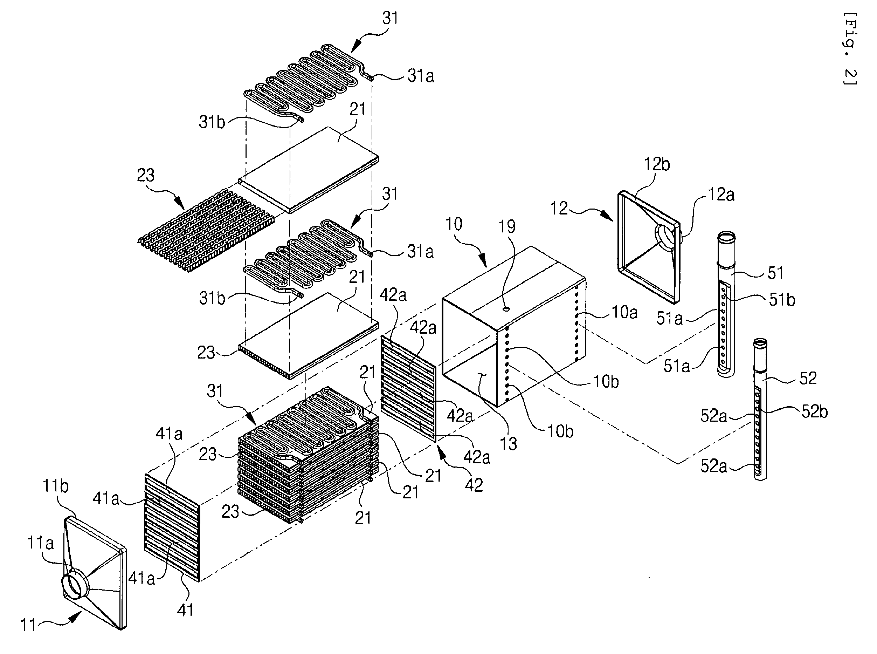

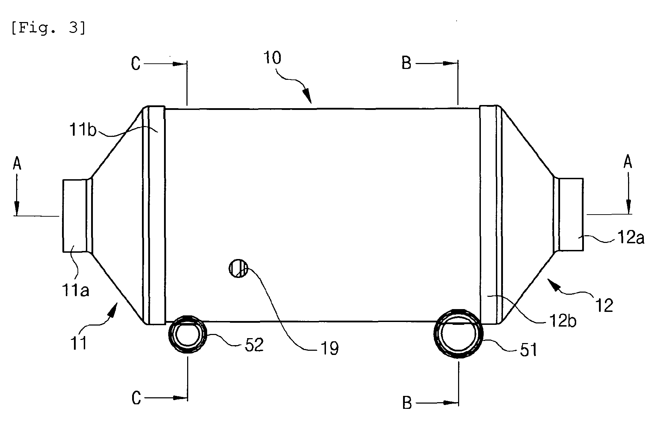

As shown in FIGS. 2 and 3, air communication holes 19 are formed in the outer surface of the housing 10. In particular, the air communication holes 19 are formed so as to penetrate through an upper surface side of the housing such that air enters and exits the hollow section 13 of the housing 10. When the air is expanded by hot exhaust gas or hot working fluid inside the hollow section 13 of the housing 10, the housing 10 may be subjected to excessive pressure. In order to prevent this, the air communication holes 19 are formed in the housing 10 such that the air inside the hollow section 13 of the housing 10 can communicate with the outside. This can consequently increase the rigidity of the housing 10 while improving the heat exchange efficiency between the exhaust gas and the working fluid.

Reference will now be made to the operation of the present invention having the above-described configuration.

When hot exhaust gas is introduced toward the inlet tank 11 of the housing 10, the hot exhaust gas passes through the exhaust gas passages 21a of the plurality of exhaust gas tubes 21 inside the housing 10, and then is discharged toward the outlet tank 12.

In the state in which the exhaust gas passes through the plurality of exhaust gas tubes 21 in this fashion, the dry saturated vapor of the working fluid is introduced into the working fluid tubes 31 through the inlet pipe 51, and performs heat exchange with the hot exhaust gas that passes through the plurality of exhaust gas tubes 21 while passing through the plurality of working fluid tubes 31. Consequently, the dry saturated vapor of the working fluid can be converted into overheated vapor and then be discharged through the outlet pipe 52.

According to the present invention as set forth above, since the working fluid tubes 31 have an oval cross-sectional structure, it is possible to advantageously minimize the thermal stress induced to the working fluid tubes 31 through which the high-temperature and high-pressure working fluid passes. It is also possible to advantageously increase the heat exchange efficiency of the working fluid that passes through the working fluid tubes 31 by increasing the contact area for heat exchange between the working fluid and the exhaust gas.

In particular, according to the present invention, the plurality of exhaust gas tubes 21 and the plurality of working fluid tubes 31 are disposed inside the hollow section 13 of the housing 10. With this configuration, the housing 10 closes the outer portions of the working fluid tubes 31 in an airtight fashion. Even if the high-temperature and high-pressure working fluid leaks from the working fluid tubes 31, it is possible to reliably prevent the working fluid from leaking out of the housing 10.

## Claims

1. An apparatus for generating superheated vapor using waste heat recovery comprising:
a housing (10) comprising an inlet tank (11) and an outlet tank (12) at both ends, wherein exhaust gas is introduced through the inlet tank (11) and discharged through the outlet tank (12);
a plurality of exhaust gas tubes (21) disposed inside the housing (10) so as to be spaced apart from each other at predetermined distances in a top-bottom direction; and
a plurality of working fluid tubes (31) alternating witht he adjacent exhaust gas tubes (21) of the plurality of exhaust gas tubes (21),
wherein an inlet pipe (51) and an outlet pipe (52) are disposed on a side surface of the housing (10), wherein working fluid is introduced through the inlet pipe (51) and discharged through the outlet pipe (52), the inlet pipe (51) and the outlet pipe (52) are connected to the plurality of working fluid tubes (31) so as to communicate each of the plurality of working fluid tubes (31), and an upper surface and a lower surface of each of the plurality of working fluid tubes (31) directly adjoin to adjacent exhaust gas tubes (21) of the plurality of exhaust gas tubes (21).

2. The apparatus according to claim 1, wherein air communication holes (19) are formed so as to penetrate through an outer surface of at one side of the housing (10), each of the plurality of exhaust gas tubes (2 1) has a flat panel structure, and each of the plurality of working fluid tubes (3 1) has a flat surface (31c, 31d) formed on either an upper surface or a lower surface, the flat surfaces (31c, 31d) of the plurality of working fluid tubes (31) directly adjoining to the plurality of exhaust gas tubes (21).

3. The apparatus according to claim 1, wherein each of the plurality of working fluid tubes (31) has an oval cross-sectional structure that has a flat surface on either the upper surface or the lower surface.

4. The apparatus according to claim 1, wherein each of the plurality of working fluid tubes (31) is bent into a shape of an S, one end of each of the plurality of working fluid tubes (31) is connected to the inlet pipe (51), and the other end of each of the plurality of working fluid tubes (31) is connected to the outlet pipe (52).

5. The apparatus according to claim 1, wherein each of the plurality of exhaust gas tubes (21) has wave fins (23) therein, first and second fitting assemblies (41, 42) are provided on both ends of the plurality of exhaust gas tubes (21), each of the first and second fitting assemblies (41, 42) comprising a plurality of fitting slots (41a, 42a), and both ends of the plurality of exhaust gas tubes (21) being fitted into the fitting slots (41a, 42a) of the first and second fitting assemblies (41, 42).

## Patentansprüche

1. Vorrichtung zum Erzeugen von Heißdampf durch Abwärmerückgewinnung, aufweisend:
ein Gehäuse (10), das einen Einlasstank (11) und einen Auslasstank (12) an beiden Enden aufweist, wobei Abgas durch den Einlasstank (11) eingeleitet wird und durch den Auslasstank (12) abgeführt wird,
eine Mehrzahl von Abgasleitungen (21), die in dem Gehäuse (10) angeordnet sind, sodass sie in einer Oben-Unten-Richtung in vorbestimmten Abständen im Abstand voneinander angeordnet sind, und
eine Mehrzahl von Arbeitsfluid-Leitungen (31), die abwechselnd mit den benachbarten Abgasleitungen (21) der Mehrzahl von Abgasleitungen (21) angeordnet sind,
wobei ein Einlassrohr (51) und ein Auslassrohr (52) an einer Seitenfläche des Gehäuses (10) angeordnet sind, wobei Arbeitsfluid durch das Einlassrohr (51) eingeleitet wird und durch das Auslassrohr (52) abgeführt wird, wobei das Einlassrohr (51) und das Auslassrohr (52) mit der Mehrzahl von Arbeitsfluid-Leitungen (31) verbunden sind, sodass sie mit jeder der Mehrzahl von Arbeitsfluid-Leitungen (31) kommunizieren, und eine obere Fläche und eine untere Fläche jeder der Mehrzahl von Arbeitsfluid-Leitungen (31) direkt an benachbarte Abgasleitungen (21) der Mehrzahl von Abgasleitungen (21) angrenzt.

2. Vorrichtung gemäß Anspruch 1, wobei Luftverbindungslöcher (19) gebildet sind, sodass sie eine Außenfläche an einer Seite des Gehäuses (10) durchdringen, wobei jede der Mehrzahl von Abgasleitungen (21) eine flache Plattenstruktur hat, und jede der Mehrzahl von Arbeitsfluid-Leitungen (31) eine ebene Fläche (31c, 31d) hat, die entweder an einer oberen Fläche oder an einer unteren Fläche gebildet ist, wobei die ebenen Flächen (31c, 31d) der Mehrzahl von Arbeitsfluid-Leitungen (31) direkt an die Mehrzahl von Abgasleitungen (21) angrenzen.

3. Vorrichtung gemäß Anspruch 1, wobei jede der Mehrzahl von Arbeitsfluid-Leitungen (31) eine ovale Querschnittstruktur hat, die eine ebene Fläche entweder an einer oberen Fläche oder an einer unteren Fläche hat.

4. Vorrichtung gemäß Anspruch 1, wobei jede der Mehrzahl von Arbeitsfluid-Leitungen (31) in eine S-Form gebogen ist, wobei ein Ende jeder der Mehrzahl von Arbeitsfluid-Leitungen (31) mit dem Einlassrohr (51) verbunden ist und das andere Ende jeder der Mehrzahl von Arbeitsfluid-Leitungen (31) mit dem Auslassrohr (52) verbunden ist.

5. Vorrichtung gemäß Anspruch 1, wobei jede der Mehrzahl von Abgasleitungen (21) Wellenrippen (23) darin aufweist, wobei eine erste und eine zweite Passvorrichtung (41, 42) an beiden Enden der Mehrzahl von Abgasleitungen (21) bereitgestellt sind, wobei jede der ersten und zweiten Passvorrichtung (41, 42) eine Mehrzahl von Pass-Schlitzen (41a, 42a) aufweist und beide Enden der Mehrzahl von Abgasleitungen (21) in die Pass-Schlitze (41a, 42a) der ersten und der zweiten Passvorrichtung (41, 42) eingepasst sind.

## Revendications

1. Appareil destiné à produire de la vapeur surchauffée en utilisant une récupération de chaleur perdue comprenant :
un boîtier (10) comprenant un réservoir d'entrée (11) et un réservoir de sortie (12) aux deux extrémités, dans lequel le gaz d'échappement est introduit par le réservoir d'entrée (11) et déchargé par le réservoir de sortie (12) ;
une pluralité de tubes de gaz d'échappement (21) disposés à l'intérieur du boîtier (10) afin d'être espacés les uns des autres à des distances prédéterminées dans une direction haut - bas ; et
une pluralité de tubes de fluide de travail (31) alternant avec les tubes de gaz d'échappement (21) adjacents de la pluralité de tubes de gaz d'échappement (21),
dans lequel un tuyau d'entrée (51) et un tuyau de sortie (52) sont disposés sur une surface latérale du boîtier (10), dans lequel le fluide de travail est introduit par le tuyau d'entrée (51) et déchargé par le tuyau de sortie (52), le tuyau d'entrée (51) et le tuyau de sortie (52) sont raccordés à la pluralité de tubes de fluide de travail (31) afin de faire communiquer chacun de la pluralité de tubes de fluide de travail (31), et une surface supérieure et une surface inférieure de chacun de la pluralité de tubes de fluide de travail (31) sont directement attenantes aux tubes de gaz d'échappement (21) adjacents de la pluralité de tubes de gaz d'échappement (21).

2. Appareil selon la revendication 1, dans lequel des trous de communication d'air (19) sont formés afin de pénétrer à travers une surface externe, au niveau d'un côté du boîtier (10), chacun de la pluralité de tube de gaz d'échappement (21) a une structure de panneau plate et chacun de la pluralité de tube de fluide de travail (31) a une surface plate (31 c, 31 d) formée sur l'une ou l'autre parmi une surface supérieure ou une surface inférieure, les surfaces plates (31 c, 31 d) de la pluralité de tubes de fluide de travail (31) étant directement attenantes à la pluralité de tubes de gaz d'échappement (21).

3. Appareil selon la revendication 1, dans lequel chacun de la pluralité de tubes de fluide de travail (31) a une structure transversale ovale qui a une surface plate sur l'une ou l'autre parmi la surface supérieure ou la surface inférieure.

4. Appareil selon la revendication 1, dans lequel chacun de la pluralité de tubes de fluide de travail (31) est courbé en une forme de S, une extrémité de chaque tube de la pluralité de tubes de fluide de travail (31) est raccordée au tuyau d'entrée (51) et l'autre d'extrémité de chaque tube de la pluralité de tubes de fluide de travail (31) est raccordée au tuyau de sortie (52).

5. Appareil selon la revendication 1, dans lequel chacun de la pluralité de tubes de gaz d'échappement (21) a des ailettes ondulées (23) à l'intérieur de ce dernier, des premier et second ensembles de montage (41, 42) sont prévus sur les deux extrémités de la pluralité de tubes de gaz d'échappement (21), chacun des premier et second ensembles de montage (41, 42) comprenant une pluralité de fentes de montage (41 a, 42a), et les deux extrémités de la pluralité de tubes de gaz d'échappement (21) étant montées dans les fentes de montage (41 a, 42a) des premier et second ensembles de montage (41, 42).
